# EUROPÄISCHE PATENTSCHRIFT

(11) **EP 0 346 568 B1**
(45) Veröffentlichungstag und Bekanntmachung des Hinweises auf die Patenterteilung: **11.05.1994**
(21) Anmeldenummer: 89103702.0
(22) Anmeldetag: 03.03.1989
(51) Int. Cl.: H04Q 3/54, G07C 1/10, H04M 3/42, H04M 3/50

(54) **Verfahren zum gegenseitigen Datenaustausch zwischen einer Kommunikations-Vermittlungsanlage und einer Personalzeit-Erfassungsanlage**
Method for mutual data communication between a communication exchange and a staff presence detection installation
Méthode pour transmission de données interactive entre un central de communication et une installation de détection de présence du personnel

(30) Priorität: 15.06.1988 DE 3820315; 16.07.1988 DE 3824190
(43) Veröffentlichungstag der Anmeldung: 20.12.1989
(73) Patentinhaber: TELENORMA GMBH, 60326 Frankfurt am Main (DE)
(72) Erfinder: Immerschitt, Joachim, Dipl.-Ing., D-6300 Giessen (DE); Pöhlchen, Klaus, Dipl.-Ing., D-6000 Frankfurt/M. 1 (DE); Schmidt, Winfried, Dipl.-Ing., D-6000 Frankfurt/M. 60 (DE); Schmidt, Hans-Peter, Dipl.-Ing., D-4156 Willich 3 (DE); Steuer, Manfred, Dipl.-Ing., D-6238 Hofheim (DE)

(56) Entgegenhaltungen:
- EP-A- 0 187 945
- EP-A- 0 258 643
- DE-A- 3 026 332
- ALBISWERK-BERICHTE, vol. 19, no. 2, November 1967, BERN (CH), Seiten 80-84; WALTER RECK ET AL.: "ZUSATZEINRICHTUNGEN ZUM SYSTEM ESK N62"
- PROCEEDINGS OF THE 1986 IEEE INTERNATIONAL CONFERENCE ON SYSTEMS, MAN, AND 14. Oktober 1986, ATLANTA (US), Seiten 1592-1596; LLOYD KONNEKER: "AUTOMATING RECEPTIONISTS"

## Beschreibung

Die Erfindung betrifft ein Verfahren zum gegenseitigen Datenaustausch zwischen einer Kommunikations-Vermittlungsanlage und einer Personalzeit-Erfassungsanlage nach dem Oberbegriff des Patentanspruches 1.

In den TN-Nachrichten 1974, Heft 75, ist ab Seite 5 ein Aufsatz abgedruckt mit dem Titel: " Die neue Teilnehmer-Generation, Möglichkeiten des Datenverkehrs in Fernsprechnebenstellenanlagen". In den dort dargestellten Abbildungen ist gezeigt, daß eine Datenerfassungsanlage mit dem Firmennamen TENODAT mit einer Fernsprechnebenstellenanlage verbunden sein kann. Die Fernsprechnebenstellenanlage stellt bei diesem Konzept nur ihre Verbindungswege zur Verfügung, damit Datenterminals, welche nicht direkt an das Datenerfassungssystem angeschlossen sind, mit der Datenerfassungsanlage verbunden werden können. Dazu gehören auch Fernsprechapparate, welche als Dateneingabegeräte benutzt werden können. Die Anschlußmöglichkeiten für das Datenerfassungssystem werden dadurch wesentlich erweitert, wobei das Kabelnetz der Fernsprechnebenstellenanlage mit ausgenutzt wird. Zu den Aufgaben des Datenerfassungssystems gehört auch eine Gleitzeiterfassung, wie dies im letzten Absatz auf Seite 11 und im ersten Absatz auf Seite 12 beschrieben ist. Dafür sind Ausweisleser vorgesehen, welche die auf einem Betriebsausweis codierten persönlichen Daten lesen können.

In einem weiteren Aufsatz, mit dem Titel " Fernsprechen und Datenverkehr-Ein gemeinsames Kommunikationssystem", welcher in der bereits genannten Literaturstelle ab Seite 16 abgedruckt ist, wird in einem Übersichtsbild auf Seite 17 dargestellt, auf welche Weise verschiedene Dateneingabeeinrichtungen über eine Fernsprechnebenstellenanlage mit Verarbeitungseinrichtungen verbunden werden können. Auch hierbei stellt die Fernsprechnebenstellenanlage lediglich ihre Verbindungswege zur Verfügung, damit die Nutzdaten an die gewünschte, vorher ausgewählte Anschlußeinheit gelangen können. Dabei muß selbstverständlich darauf geachtet werden, daß die Verkehrsleistung der Fernsprechnebenstellenanlage so ausreichend bemessen ist, daß der reine Fernsprechverkehr ohne große Verluste durchgeführt werden kann.

In keinem der beiden zuvor erwähnten Aufsätze ist erwähnt, daß Datenerfassungsanlage und Fernsprechnebenstellenanlage sich gegenseitig beeinflussen können, und daß von der Fernsprechnebenstellenanlage aus ohne Mitwirkung eines Teilnehmers Daten an ein Endgerät gelangen können, welches ausschließlich an einer Datenerfassungseinrichtung angeschlossen ist. Die Fernsprechnebenstellenanlage dient, wie bereits erwähnt worden ist, ausschließlich dazu, unter Ausnutzung des meist vorhandenen Leitungsnetzes die Anschlußmöglichkeiten von Datenendgeräten vielseitiger zu gestalten, indem die Verbindungswege für den Datenverkehr mitbenutzt werden.

Ein wichtiges Merkmal in Fernsprechvermittlungsanlagen ist das Feststellen des Frei-Besetzt-Zustandes eines angewählten Anschlußorgans, um einen anrufenden Teilnehmer mit einem Freiton oder Besetztton darüber zu informieren, ob eine Verbindung zustande kommen kann oder nicht. Es ist außerdem bekannt, Besetztzustände von Teilnehmer-Anschlußorganen an einem Vermittlungsplatz oder Vermittlungsapparat anzuzeigen. Ein Beispiel einer derartigen Anzeigeeinrichtung ist ein in den TN-Nachrichten 1967, Heft 67, auf den Seiten 24 und 25 dargestelltes und beschriebenes Universal-Besetztlampenfeld. Dieses Besetztlampenfeld ist so ausgestaltet, daß jeweils die Ziffern einer Rufnummer eines besetzten Anschlusses aufleuchten.

Außerdem ist es bekannt, den Frei-Besetztzustand eines angerufenen Anschlußorgans am Vermittlungsplatz oder einem Endgerät optisch darzustellen. In der DE-PS 32 38 770 ist ein Fernsprechapparat mit optischen Anzeigeeinrichtungen beschrieben, bei dem der Schaltzustand eines angerufenen Teilnehmeranschlusses angezeigt wird.

Bei dieser dem Stand der Technik entsprechenden Verfahrensweise wird einem Anrufer beim Aufbauen einer Verbindung lediglich eine Aussage über den Schaltzustand des erreichten Anschlusses mitgeteilt. Eine Auskunft darüber, ob der gewünschte Teilnehmer für eine Gesprächsverbindung zur Verfügung steht, wird erst dann gegeben, wenn sich der gewünschte Partner meldet, oder wenn nach mehreren Rufintervallen angenommen werden muß, daß das Gespräch wegen Abwesenheit des Teilnehmers nicht zustande kommen kann. Bei einem nicht zustande gekommenen Gespräch wird in aller Regel der anrufende Teilnehmer nach einiger Zeit erneut versuchen, den gewünschten Teilnehmer zu erreichen, wenn er nicht weiß, daß dieser abwesend ist.

Die Aufgabe der Erfindung besteht darin, ein Verfahren anzugeben, wobei von Endgeräten einer Personalzeit-Erfassungsanlage aus ein Einfluß auf Merkmale einer Kommunikationsanlage ausgeübt werden kann und wobei es möglich ist, daß in der Kommunikationsvermittlungsanlage vorhandene Information bis zu einem Endgerät der Personalzeit-Erfassungsanlage gelangen kann.

Außerdem soll eine Kommunikations-Vermittlungsanlage Informationen über die Anwesenheit oder Abwesenheit von Personen erhalten, damit die Voraussetzungen geschaffen werden, daß den Teilnehmeranschlußorganen zugeordnet die Anwesenheit oder Abwesenheit der betreffenden Personen festgestellt und angezeigt werden kann.

Zur Lösung dieser Aufgabe sind Merkmale vorgesehen, wie sie in den Patentansprüchen 1 und 11 angegeben sind.

Damit wird in vorteilhafter Weise erreicht, daß bei der Betätigung eines Endgerätes der Personalzeit-Erfassungsanlage, d. h. beim Kommen und Gehen bestimmter Personen, Merkmale in der Kommunikations-Vermittlungsanlage geändert werden können, welche mit dem Tätigkeitsbereich dieser Personen im Zusammenhang stehen. Außerdem kann beim Kommen und/oder Gehen eine persönliche oder allgemeine Mitteilung von der Kommunikations-Vermittlungsanlage aus direkt zu dem betreffenden Endgerät der Personalzeit-Erfassungsanlage durchgegeben werden. Zusätzlich werden die in einer Personalzeit-Erfassungsanlage zur Verfügung stehenden Informationen automatisch zu einer Kommunikations-Vermittlungsanlage übertragen, damit anrufenden Teilnehmern und/oder Bedienungspersonen zusätzliche Auskünfte gegeben werden können über die Anwesenheit oder Abwesenheit von Personen.

Bei den in den Unteransprüchen angegebenen Weiterbildungen der Erfindung ist aufgeführt, welche Einzelheiten bei der Beeinflussung von Merkmalen der Kommunikations-Vermittlungsanlage wichtig sein können. Außerdem ist angegeben, auf welche Weise wichtige Mitteilungen an Personen gelangen können, die den Betrieb gerade betreten oder verlassen wollen. Weiterhin ist in den Unteransprüchen ausgeführt, daß mit Hilfe der Personenzeit-Erfassungsanlage Möglichkeiten bestehen, eine Überwachungsfunktion mit Hilfe der Kommunikations-Vermittlungsanlage auszuüben.

Ein Ausführungsbeispiel der Erfindung wird nachfolgend anhand von Zeichnungen näher erläutert. Es zeigt:
- Fig. 1: Ein Blockschaltbild einer Kommunikations-Vermittlungsanlage und einer damit verbundenen Personalzeit-Erfassungsanlage.
- Fig. 2: Ein Blockschaltbild wie Fig. 1 zur Übermittlung der Informationen über Anwesenheit bzw. Abwesenheit zur Kommunikations-Vermittlungsanlage.

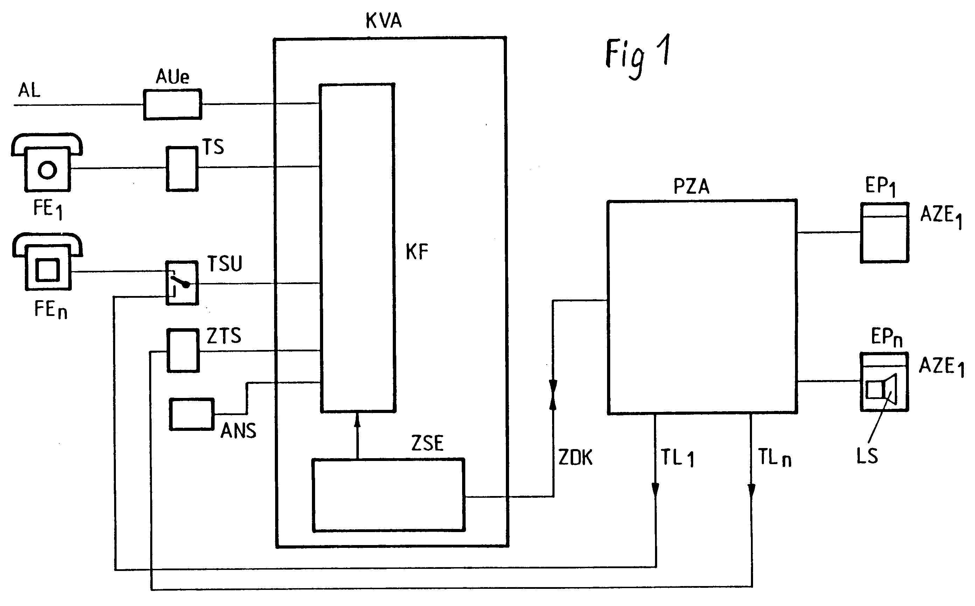

In der Figur 1 ist das Blockschaltbild einer Kommunikations-Vermittlungsanlage KVA dargestellt, welche für den vorliegenden Fall der Einfachheit halber als Fernsprechvermittlungsanlage ausgeführt ist. Es ist jedoch ohne weiteres denkbar, daß neben den dargestellten Fernsprechendgeräten FE1 bis FEn außerdem Endgeräte anderer Art wie beispielsweise Fernschreiber, Teletext-Maschinen, Fernkopierer, usw., angeschlossen sein können. Dies gilt insbesondere für moderne digitale Kommunikations-Vermittlungsanlagen KVA. Eine derartige Vermittlungsanlage hat außerdem besondere Übertragungen AUe, woran Anschlußleitungen AL für das öffentliche Fernsprechnetz angeschlossen sind. Im wesentlichen besteht eine Kommunikations-Vermittlungsanlage KVA aus einem Koppelfeld KF, worüber die Endgeräte und sonstigen Anschlüsse miteinander verbunden werden können, wenn entsprechende Voraussetzungen vorliegen. Zur Steuerung dieses Koppelfeldes KF ist eine zentrale Steuereinrichtung vorgesehen.

Außerdem ist in der Zeichnung eine Personalzeit-Erfassungsanlage PZA dargestellt, woran Endgeräte EP1 bis EPn angeschlossen sind, welche für die Eingabe von Daten eingerichtet sind. Diese Endgeräte EP1 bis EPn weisen Anzeigeeinrichtungen AZE1 bis AZEn auf, womit einem Benutzer in bekannter Weise Bedienungshinweise und Quittungsanzeigen gegeben werden können. Für eine akustische Signalisierung kann außerdem ein als Lautsprecher LS ausgebildeter elektroakustischer Wandler vorgesehen sein.

Die Personalzeit-Erfassungsanlage PZE ist mit der Kommunikations-Vermittlungsanlage KVA über einen zentralen Datenkanal ZDK zusammengeschaltet und besitzt außerdem Teilnehmerleitungen TL1 bis TLn, womit ein Zugang zur Kommunikations-Vermittlungsanlage hergestellt wird. Die Funktionen, welche durch einen gegenseitigen Datenaustausch zwischen der Kommunikations-Vermittlungsanlage KVA und der Personalzeit-Erfassungsanlage PZA durch gegenseitige Beeinflussung ausgelöst werden können, werden nachfolgend beschrieben. Die einzelnen Funktionen werden jeweils dann wirksam, wenn an einem der an die Personalzeit-Erfassungsanlage PZA angeschlossenenen Endgeräte, z. B. EP1 eine Eingabe stattfindet. Bei einer Eingabe an einem derartigen Endgerät EP1 werden in bekannter Weise die auf einem Ausweis gespeicherten persönlichen Dann gelesen. In einem nicht dargestellten Speicher der Personalzeit-Erfassungsanlage PZA ist die jeweils zu einer Person gehörende Rufnummer des Fernsprechanschlusses gespeichert. Dieser Speicher kann auch in umgekehrter Richtung abgefragt werden, so daß beim Bekanntsein einer Rufnummer eine für die betreffende Person bestimmte Information dieser zugeordnet werden kann.

Es wird nun zunächst beschrieben, auf welche Weise von der Personalzeit-Erfassungsanlage PZA aus, Funktionen und Merkmale der Kommunikations-Vermittlungsanlage KVA beeinflußt werden können. Wie bereits erwähnt worden ist, werden bei einer Eingabe an einem Endgerät, z. B. EP1, die eine Person kennzeichnenden Daten erfaßt. Gleichzeitig damit wird durch eine Eingabe in bekannter Weise mitgeteilt, ob diese Person kommt oder geht, d. h. ob sie für die nächste Zeit anwesend oder abwesend ist. Da die Personalzeit-Erfassungsanlage PZA in der Lage ist, personenbezogene Daten in eine Rufnummer der Kommunikations-Vermittlungsanlage KVA umzusetzen, wird diese Rufnummer jeweils zusammen mit einer Zusatzinformation (kommt oder geht) über einen zentralen Datenkanal ZDK zur Kommunikations-Vermittlungsanlage KVA übertragen. Diese Information wird dem betreffenden Teilnehmeranschluß zugeordnet in einem Speicher der zentralen Steuereinrichtung ZSE abgelegt. Daraufhin wird je nach den in dieser zentralen Steuereinrichtung ZSE eingespeicherten Funktionsmerkmalen veranlaßt, daß beispielsweise dem betreffenden Teilnehmeranschluß TS zugeordnete Berechtigungen und/oder Funktionsmerkmale geändert werden oder außer Kraft gesetzt werden.

So kann beispielsweise vorgesehen werden, daß die Berechtigung eines Fernsprechanschlusses, von dem aus normalerweise Ferngespräche geführt werden können, so umgeschaltet wird, daß nur noch Interngespräche oder Notanrufe möglich sind, wenn der zuständige Mitarbeiter gegangen ist. Bei einer bestehenden Rufumleitung kann so verfahren werden, daß eine Rufumleitung aufgehoben wird, wenn der Inhaber des Anschlusses, zu dem die Rufumleitung besteht, gegangen ist. Selbstverständlich werden die Berechtigungen oder die sonstigen Merkmale, welche einem Fernsprechanschluß zugeordnet sind, wieder wirksam, wenn die betreffende Rufnummer zusammen mit einem Kommt-Signal von der Personalzeit-Erfassungsanlage PZA zur Kommunikations-Vermittlungsanlage KVA übertragen wird.

Bei diesem Verfahren lassen sich auch Teilnehmergruppen bilden, so daß eine Umschaltung von Merkmalen erst dann wirksam wird, wenn alle Teilnehmer dieser Gruppe den Arbeitsplatz verlassen haben oder anwesend sind. Ein Beispiel hierfür ist die bei Fernsprechnebenstellenanlagen vorgesehene Nachtschaltung, die wirksam wird, wenn beispielsweise alle drei Bedienungspersonen der Vermittlungsplätze ein Endgerät EP der Personalzeit-Erfassungsanlage PZA mit einem Geht-Kommando betätigt haben. Die Nachtschaltung wird unwirksam, wenn eine dieser Personen sich mit einem Kommt-Signal zu erkennen gibt. Bei derartigen Prozeduren werden selbstverständlich längere Abwesenheitszeiten, z. B. Urlaub, berücksichtigt, welche in bekannter Weise in die Personalzeit-Erfassungsanlage eingegeben werden.

Eine Gruppenbildung von Teilnehmeranschlüssen im Zusammenhang mit den erfindungsgemäßen Verfahren kann auch nützlich sein, wenn in der Kommunikations-Vermittlungsanlage vorprogrammierte Konferenzverbindungen hergestellt werden sollen, wobei es wichtig sein kann, daß wirklich alle der vorgesehenen Teilnehmer daran teilnehmen sollen. In einem solchen Anwendungsfall würde eine Konferenz nur dann zustande kommen, wenn alle Teilnehmer anwesend sind. Dabei muß natürlich berücksichtigt werden, daß wegen Dienstreisen oder Urlaub für längere Zeit abwesende Teilnehmer vorübergehend ausgeklammert werden.

Da die Personalzeit-Erfassungsanlage über die aktuelle Uhrzeit und auch über ein Kalenderwerk verfügt, kann vorgesehen werden, daß zu vorbestimmten Teilnehmeranschlüssen Anrufe durchgeführt werden, wenn die zuständigen Personen zu den vorgesehenen Zeiten nicht anwesend sind. Somit ist es möglich, eine Überwachungsfunktion ausgehend von der Personalzeit-Erfassungsanlage PZA über die Kommunikations-Vermittlungsanlage KVA auszuüben, wenn dies aus sicherheitstechnischen oder produktionstechnischen Gegebenheiten für erforderlich gehalten wird. Ein Anruf zu einer vorbestimmten Teilnehmerstelle, beispielsweise TS und damit zum Endgerät FE1 kann beispielsweise dann durchgeführt werden, wenn der betreffende Teilnehmer nach dem Beginn der Arbeitszeit keine Kommt-Eingabe gemacht hat. Ebenso ist es möglich, daß Anrufe nach Ende der Arbeitszeit durchgeführt werden, wenn der zuständige Mitarbeiter keine Geht-Eingabe getätigt hat. Falls die angerufenen Teilnehmer sich melden, können sie mit einer Ansageeinrichtung ANS verbunden werden, um eine entsprechende Auskunft zu erhalten. Dabei kann auch auf eine möglicherweise vergessene Kommt-Eingabe hingewiesen werden. Falls bei einem derartigen Kontrollanruf keine Teilnehmermeldung erfolgt, so kann je nach Wichtigkeit der betreffenden Stelle veranlaßt werden, daß ein Ausdruck erscheint und/oder der Werksdienst alarmiert wird.

Das Herstellen solcher Kontrollanrufe kann von der Personalzeit-Erfassungsanlage PZA ausgehend entweder über den bereits erwähnten zentralen Datenkanal ZDK erfolgen oder über Teilnehmeranschlüsse, welche von der Personalzeit-Erfassungsanlage PZA aus direkt beeinflußbar sind. Es ist in der Zeichnung dargestellt, daß die Personalzeit-Erfassungsanlage über Teilnehmerleitungen TL1 bis TLn verfügt, welche direkt zur Kommunikations-Vermittlungsanlage KVA geführt sind. Dort können eigene Teilnehmeranschlußorgane ZTS vorhanden sein, oder es kann ein vorhandener umschaltbarer Teilnehmeranschluß vorübergehend der Personalzeit-Erfasssungsanlage PZA zur Verfügung gestellt werden.

Im folgenden wird beschrieben, auf welche Weise Informationen, welche in der Kommunikations-Vermittlungsanlage KVA entstanden sind, über die Personalzeit-Erfassungsanlage PZA an die entsprechenden Endgeräte EP1 bis EPn gelangen, wenn dort Eingaben gemacht werden. Moderne Kommunikations-Vermittlungsanlagen KVA enthalten Speicher, worin unerledigte Anrufe (Anrufspeicher, Nachrichten- Sprachspeicher) oder sonstige Informationen einem Teilnehmeranschluß zugeordnet abgelegt werden können. Solche Speicher sind dann von der betreffenden Teilnehmerstelle aus abfragbar, so daß die dort abgelegte Information ausgewertet werden kann. Bei der erfindungsgemäßen Verbindung zwischen Kommunikations-Vermittlungsanlage KVA und einer Personalzeit-Erfassungsanlage PZA ist vorgesehen, daß über den zwischen den beiden Anlagen bestehenden zentralen Datenkanal ZDK zumindest mitgeteilt wird, ob für einen Teilnehmeranschluß abzufragende Informationen vorliegen. Derartige Daten werden in einem in der Personalzeit-Erfassungsanlage PZA vorhandenen Speicher der betreffenden Teilnehmerrufnummer zugeordnet abgelegt. In diesem Zusammenhang kann es zweckmäßig sein, daß beim Ende der täglichen Arbeitszeit eine Übertragung von Daten über unerledigte Angelegenheiten zur Personalzeit-Erfassungsanlage PZA stattfindet, so daß diese in die entsprechenden Speicherbereiche gelangen können, sie personenbezogen abrufbar sind.

Die in der Personalzeit-Erfassungsanlage PZA unter Rufnummern und damit personenbezogen abgelegten Daten bewirken, daß beim Betätigen eines Endgerätes, z. B. EP1, eine Mitteilung zu diesem Endgerät EP1 hin übertragen wird. Dabei werden die vom Endgerät EP1 gelesenen Personendaten zur Adressierung der besagten Speicher benutzt. Wenn keine Nachricht vorliegt, so wird die Eingabeprozedur in der üblichen Weise mit üblichen Quittungstönen oder Anzeigen durchgeführt. Wenn aber in dem einer Person zugeordneten Speicherbereich etwas eingetragen ist, so wird an dem betreffenden Endgerät EP1 ein Ton hörbar, der in seiner Frequenz vom üblichen Quittungston abweicht. Dieser Ton soll als Aufmerksamkeitszeichen dazu auffordern, die Anzeigeeinrichtung AZE1 genauer zu beachten. Die personenbezogen in der Personalzeit-Erfassungsanlage PZA abgelegten Daten werden zum Endgerät EP1 übertragen, so daß sie in der Anzeigeeinrichtung AZE1 dargestellt werden können. Es kann sich dabei um einzelne Worte und/oder Zahlen handeln, welche beispielsweise dazu auffordern, einen bestimmten Teilnehmeranzurufen, oder einen Sprachspeicher abzufragen. Es lassen sich in diesem Zusammenhang auch Piktogramme, beispielsweise die Darstellung eines Telefonapparates, verwenden. Ebenso ist es denkbar, bei der Kommt-Eingabe eine Person auf das Vorliegen eines in der Nacht angekommenen Fernschreibens aufmerksam zu machen. Auf diese Weise können auch Gruppen von Personen beispielsweise über den Termin einer kurzfristig angesetzten Besprechung informiert werden. Zu diesem Zweck kann eine entsprechende Information entweder direkt durch ein besonderes Eingabegerät in die Personalzeit-Erfassungsanlage PSA eingegeben werden, oder es wird zu diesem Zweck eine Fernsprech- oder Fernschreibverbindung aufgebaut über die Kommunikations-Vermittlungsanlage KVA zu Personalzeit-Erfassungsanlage PZA, um eine entsprechende Information einem vorbestimmten Personenkreis zukommen zu lassen.

Die an der Personalzeit-Erfassungsanlage PZA angeschlossenen Endgeräte, z. B. EPn können auch mit einer synthetischen Sprachausgabeeinrichtung ausgestattet sein, so daß digital gespeicherte Informationen in synthetischer Sprache über einen Lautsprecher LS ausgegeben werden können. Eine derart erfolgende sprachliche Ausgabe kann auch mit einer Anzeige kombiniert werden. Es kann außerdem vorgesehen werden, daß durch zusätzliche Betätigung von Tasten am Eingabegerät EPn weitere Informationen, sofern vorhanden, abgefragt werden können. Aufgrund von in dieser Art sprachlich und/oder optisch abgegebenen Informationen können wichtige Angelegenheiten umgehend erledigt werden.

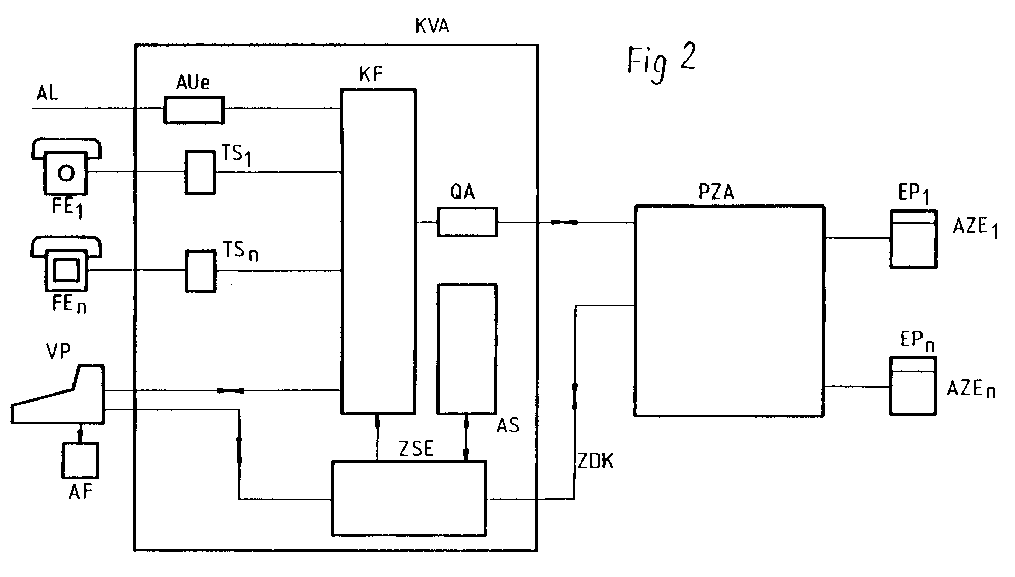

In der Fig. 2 ist ein Arbeitsspeicher AS dargestellt, mit dem die zentrale Steuereinrichtung ZSE zusammenarbeitet. Dort sind die einzelnen Verbindungs- und Schaltzustände der einzelnen Anschlußorgane abgespeichert. Außerdem ist an die Kommunikations-Vermittlunesanlage KVA mindestens ein Vermittlungsplatz VP angeschlossen, worüber Verbindungen aufgebaut werden können, welche von den Teilnehmern nicht selbst herstellbar sind. An einem derartigen Vermittlungsplatz VP ist ein Anzeigefeld AF angeschlossen, welches in bekannter Weise zur Darstellung der Frei-Besetztzustände von Anschlußleitungen dient. Dieses Anzeigefeld AV kann jedoch auch in erfindungsgemäßer Weise ausgeführt sein und auch die Anwesenheit oder Abwesenheit von Teilnehmern anzeigen.

Außerdem ist in der Zeichnung eine Personalzeit-Erfassungsanlage PZA dargestellt, woran Endgeräte EP1 bis EPn angeschlossen sind, welche für die Eingabe von Daten eingerichtet sind. Diese Endgeräte EP1 bis EPn weisen Anzeigeeinrichtungen AZ1 bis AZn auf, womit einem Benutzer in bekannter Weise Bedienungshinweise und Quittungsanzeigen gegeben werden können.

Die Personalzeit-Erfassungsanlage PZA ist mit der Kommunikations-Vermittlungsanlage KVA über einen zentralen Datenkanal ZDK zusammengeschaltet und besitzt außerdem eine Verbindungsleitung zur Kommunikations-Vermittlungsanlage KVA, welche dort mit einem Querverbindungsanschlußorgan QA verbunden ist.

Wenn an einem der an die Personalzeit-Erfassungsanlage PZA angeschlossenen Endgeräte, z. B. EP1 eine Eingabe stattfindet, werden in bekannter Weise die auf einem Ausweis gespeicherten persönlichen Daten gelesen. In einem nicht dargestellten Speicher der Personalzeit-Erfassungsanlage PZA ist die jeweils zu einer Person gehörende Rufnummer des Fernsprechanschlusses gespeichert. Die Personalzeit-Erfassungsanlage PZA veranlaßt bei einer Eingabe an einem Endgerät EP eine Datenübertragung zur Kommunikations-Vermittlungsanlage, wobei zusammen mit der betreffenden Rufnummer ein Kennzeichen darüber mitgeteilt wird, ob die zugehörige Person eine Kommt- oder eine Geht-Meldung abgegeben hat. Dieses Kennzeichen wird in einem dem betreffenden Teilnehmeranschluß zugeordneten Bereich des Arbeitsspeichers AS innerhalb der Kommunikations-Vermittlungsanlage KVA abgelegt. Somit ist aufgrund des jeweils zuletzt eingetragenen Kennzeichens bekannt, ob die Person, welcher der betreffende Teilnehmeranschluß zugeordnet ist, anwesend oder abwesend ist. In diesem Zusammenhang können auch längerfristige Abwesenheiten, z. B. wegen Dienstreisen, Urlaub, Krankheit, usw., welche in der Personalzeit-Erfassungsanlage PZA mit besonderen Eingaben eingespeichert worden sind, im Arbeitsspeicher AS der Kommunikations-Vermittlungsanlage KVA eingetragen werden. An dieser Stelle genügt es im einfachsten Fall, wenn lediglich ein Bit gesetzt wird, welches über die Anwesenheit oder Abwesenheit des betreffenden Teilnehmers Auskunft gibt. Es könnte jedoch auch vorgesehen werden, daß eine detaillierte Auskunft über die Art der Abwesenheit im Arbeitspeicher AS abgelegt wird, so daß beispielsweise die Bedienungsperson eines Vermittlungsplatzes darüber informiert werden kann, warum ein Teilnehmer längere Zeit abwesend ist.

Die Kommunikations-Vermittlungsanlage KVA erhält auf diese Weise ein zusätzliches Kriterium, welches einen Einfluß auf das Zustandekommen von Verbindungen hat. Dieses Kriterium kann dazu ausgenutzt werden, daß am Vermittlungsplatz VP die Abwesenheit eines Teilnehmers zusätzlich angezeigt wird, wenn beispielsweise eine kommende Amtsverbindung zu dem betreffenden Anschlußorgan zugeteilt wird. Die Vermittlungsperson kann dann einem anrufenden Teilnehmer entweder eine Ersatzverbindung herstellen, oder ihm mitteilen, daß die gewünschte Person nicht erreichbar ist. Wenn auch noch die Gründe einer Abwesenheit am Vermittlungsplatz einzel dargestellt werden so kann auch der voraussichtliche Zeitraum einer Abwesenheit abgeschätzt werden, so daß sich dann weitere Anrufe, die unbedingt die betreffende Person erreichen sollen, erübrigen.

Es ist bekannt, an Vermittlungsplätzen ein Besetztanzeigefeld vorzusehen. Um auch die Abwesenheiten oder Anwesenheiten der mit Teilnehmeranschlüssen in Verbindung zu bringenden Personen anzeigen zu können, kann entweder ein separates Anzeigefeld für Anwesenheiten oder Abwesenheiten vorgesehen werden, oder es kann mit einer Umschalteeinrichtung das vorhandene Besetztlampenfeld mit den Informationen für Abwesenheiten, bzw. Anwesenheiten beaufschlagt werden. Es ist außerdem möglich, daß bei einem vorhandenen Besetztanzeigefeld die Teilnehmerrufnummer oder Teile davon blinkend eingeschaltet werden, wenn die betreffende Person abwesend ist. Auf diese Weise erhält eine Vermittlungsperson zusätzliche Hinweise, wenn, wie zuvor beschrieben worden ist, Ersatzverbindungen aufgebaut werden, und möglicherweise eine stellvertretende Person ebenfalls nicht anwesend ist.

Neben der vorbeschriebenen Verfahrensweise besteht außerdem die Möglichkeit, daß von einem Vermittlungsplatz VP oder von einem dazu berechtigten Endgerät FE aus eine Verbindung zur Personalzeit-Erfassungsanlage PZA aufgebaut wird, um für einen Teilnehmeranschluß die zugehörigen Anwesenheits- bzw. Abwesenheitsdaten der betreffenden Person abzufragen. Dabei ist es auch möglich, daß mehrere Personen als Anschlußinhaber berücksichtigt werden. In diesem Zusammenhang können auch Verknüpfungen mehrerer Personen zu einem Teilnehmeranschluß dergestalt vorgesehen werden, daß eine Abwesenheit erst dann signalisiert wird, wenn alle Personen abwesend sind, und daß eine Anwesenheit schon dann signalisiert wird, wenn nur eine Person anwesend ist.

Bei einer Anfrage an die Personalzeit-Erfassungsanlage PZA können die entsprechenden Antworten optisch angezeigt werden, entweder am Vermittlungsplatz, wo ohnehin optische Anzeigemittel vorhanden sind oder an einem Endgerät, welches mit optischen Anzeigemitteln ausgestattet ist. Außerdem kann eine Verbindung zur Personal-Erfassungsanlage PZA über ein besonderes Querverbindungs-Anschlußorgan QA aufgebaut werden, wobei dann die Auskunft über einen Teilnehmeranschluß von der Personalzeit-Erfassungsanlage PZA aus mit einer Sprachansage durchgegeben wird. Dabei sind zusätzliche zeitliche Eingaben möglich, so daß in Erfahrung gebracht werden kann, wie lange beispielsweise eine Dienstreise oder eine Urlaubszeit noch dauert.

Die im Arbeitsspeicher AS den Teilnehmeranschlüssen TS zugeordnet abgelegte Information über die Anwesenheit bzw. Abwesenheit von Teilnehmern kann außerdem dazu benutzt werden, den Freiton, welcher nach dem Ende einer Wahl gesendet wird, in seiner Frequenz und/oder seinem Rhythmus abzuwandeln. Ein anrufender Teilnehmer wird dadurch informiert, daß sich bei dieser Verbindung voraussichtlich niemand melden wird. Er kann sich dann sofort dazu entschließen, die Verbindung auszulösen, um ggf. eine Ersatzverbindung zu einem Stellvertreter aufzubauen. Bei einer derartigen Verfahrensweise werden unnötige Wartezeiten auf das Melden eines Teilnehmers vermieden.

Alle zuvor beschriebenen Merkmale können auch dann wirksam werden, wenn Fernsprechapparate benutzt werden, welche mit einer Eingabeeinrichtung ausgestattet sind, wie dies beispielsweise in der DE-PS 33 06 681 beschrieben ist. Wenn ein derartiger Fernsprechapparat zu einer direkter Eingabe von Zeitdaten benutzt wird, hat er dieselbe Funktion wie ein an die Personalzeit-Erfassungsanlage PZA angeschlossenes Endgerät EP.

## Patentansprüche

1. Verfahren zum gegenseitigen Datenaustausch zwischen einer Kommunikations-Vermittlungsanlage und einer Personalzeit-Erfassungsanlage, wobei die beiden Anlagen über zentrale Datenkanäle und/oder einzelne Anschlußleitungen miteinander verbunden sind und in beiden Anlagen zentrale Steuer- und Speichereinrichtungen vorhanden sind,
dadurch gekennzeichnet,
daß bei der Betätigung eines Endgerätes (EP) der Personalzeit-Erfassungsanlage (PZA) eine Datenübertragung zur Kommunikations-Vermittlungsanlage (KVA) stattfindet und dadurch dort bestimmte Merkmale geändert werden können, und/oder daß teilnehmerindividuelle Informationen von der Kommunikations- Vermittlungsanlage (KVA) zu dem betreffenden Endgerät (EP) der Personalzeit-Erfassungsanlage (PZA) übertragen werden, welche in einer dort befindlichen Anzeigeeinrichtung (AZE) dargestellt oder sprachlich ausgegeben werden.

2. Verfahren nach Anspruch 1,
dadurch gekennzeichnet,
daß für den durch eine Eingabeprozedur an einem Endgerät (EP) der Personalzeit-Erfassungsanlage gekennzeichneten Teilnehmeranschluß (TS) der Kommunikations-Vermittlungsanlage (KVA) bestehende Berechtigungen und/oder Rufumleitungen, bzw. -weiterleitungen, und/oder andere Merkmale umgeschaltet oder unwirksam werden können.

3. Verfahren nach Anspruch 2,
dadurch gekennzeichnet,
daß Teilnehmeranschlüsse (TS) der Kommunikations-Vermittlungsanlage (KVA) gruppenweise zusammengefaßt werden können, so daß Merkmaländerungen erst dann über die Zeiterfassung gesteuert werden, wenn die gesamte Gruppe von Personen anwesend oder abwesend ist.

4. Verfahren nach Anspruch 3,
dadurch gekennzeichnet,
daß durch besondere Eingaben (Urlaub, Krankheit, etc.,) bei der Personalzeit-Erfassungsanlage (PZA) die Gruppenbildung geändert und die Gruppengröße angepaßt werden kann.

5. Verfahren nach Anspruch 1,
dadurch gekennzeichnet,
daß bei einer Informationsübertragung von der Kommunikations-Vermittlungsanlage (KVA) zu einem Endgerät (EP) der Personalzeit-Erfassungsanlage (PZA) anläßlich einer dort erfolgten Eingabeprozedur ein besonderes akustisches Aufmerksamkeitszeichen erzeugt wird.

6. Verfahren nach Anspruch 1,
dadurch gekennzeichnet,
daß bei einer Informationsübertragung von der Kommunikations-Vermittlungsanlage (KVA) zu einem Endgerät (EP) der Personalzeit-Erfassungsanlage (PZA) anläßlich einer dort erfolgten Eingabeprozedur verschiedene Worte und/oder Piktogramme in der Anzeigeeinrichtung dargestellt werden, die eine Person beim "Kommen" auf vorliegende Nachrichten und/oder wichtige Angelegenheiten hinweisen.

7. Verfahren nach Anspruch 1,
dadurch gekennzeichnet,
daß durch eine Informationsübertragung von der Personalzeit-Erfassungsanlage (PZA) zur Kommunikations-Vermittlungsanlage (KVA) Anrufe zu vorbestimmten Teilnehmeranschlüssen (TS) veranlaßt werden können, wenn Personen außerhalb der Arbeitszeitgrenzen noch, bzw. innerhalb der Arbeitszeitgrenzen noch nicht anwesend sind.

8. Verfahren nach Anspruch 7,
dadurch gekennzeichnet,
daß für derartige Anrufe besondere Teilnehmeranschlüsse (ZTS) zur Verfügung stehen.

9. Verfahren nach Anspruch 7,
dadurch gekennzeichnet,
daß für derartige Anrufe vorhandene Teilnehmeranschlüsse (TSU) vorübergehend in Anspruch genommen werden.

10. Verfahren nach Anspruch 7,
dadurch gekennzeichnet,
daß bei derartigen Anrufen die Teilnehmermeldung überwacht wird und eine Ansage durchgegeben wird, und daß bei Nichtmelden ein besonderes Kriterium gebildet wird, welches zur Personalzeit-Erfassungsanlage (PZA) gesendet wird und zu einem Ausdruck und/oder einem Alarm führen kann.

11. Verfahren zum gegenseitigen Datenaustausch zwischen einer Kommunikations-Vermittlungsanlage und einer Personalzeit-Erfassungsanlage, wobei die beiden Anlage über zentrale Datenkanäle und/oder einzelne Anschlußleitungen miteinander verbunden sind und in beiden Anlagen zentrale Steuer- und Speichereinrichtungen vorhanden sind,
dadurch gekennzeichnet,
daß aufgrund einer Kommt/Geht-Meldung an einem Endgerät (EP) der Personalzeit-Erfassungsanlage (PZA) ein Kennzeichen zur Kommunikations-Vermittlungsanlage (KVA) übertragen wird, welches in einem Arbeitsspeicher (AS) in dem Bereich abgelegt wird, der dem der betreffenden Person zugewiesenen Anschlußorgan (TS) zugeordnet ist,
und daß damit neben der bei Kommunikations-Vermittlungsanlagen (KVA) üblichen Feststellung und Anzeige des Frei/Besetzt-Zustandes von Anschlußorganen auch eine Feststellung und Anzeige der Anwesenheit oder Abwesenheit eines Teilnehmers erfolgt.

12. Verfahren nach Anspruch 11,
dadurch gekennzeichnet,
daß die Abwesenheit oder Anwesenheit eines Teilnehmers am Vermittlungsplatz (VP) zusätzlich angezeigt wird, wenn eine Verbindung zu dem betreffenden Anschlußorgan aufgebaut wird.

13. Verfahren nach Anspruch 12,
dadurch gekennzeichnet,
daß die Gründe einer Abwesenheit bei einer Abwesenheitsanzeige einzeln dargestellt werden können.

14. Verfahren nach Anspruch 11,
dadurch gekennzeichnet,
daß ein Anzeigefeld (AF) für die Anzeige von abwesenden oder anwesenden Teilnehmern vorgesehen ist, welches für eine vorbestimmte Anzahl von Anschlußorganen (TS) ausgelegt und wahlweise umschaltbar ist, wenn die Gesamtzahl der Anschlußorgane (TS) größer ist als die Anzahl der Anzeigeelemente.

15. Verfahren nach Anspruch 14,
dadurch gekennzeichnet, daß
ein für die Besetztanzeige vorgesehenes Anzeigefeld (AF) so umschaltbar ist, daß die Abwesenheiten oder Anwesenheiten der zu den Anschlußorganen (TS) gehörenden Personen angezeigt werden.

16. Verfahren nach Anspruch 14,
dadurch gekennzeichnet,
daß die Abwesenheit eines Teilnehmers bei einem Besetztanzeigefeld (AF) durch eine blinkende Anzeige der betreffenden Ziffern einer Rufnummer dargestellt wird.

17. Verfahren nach Anspruch 11,
dadurch gekennzeichnet,
daß von einem Vermittlungsplatz (VP) oder von einem dazu berechtigten Endgerät (FE) aus eine Verbindung zur Personalzeit-Erfassungsanlage (PZA) aufgebaut werden kann, um die eine Person betreffenden Anwesenheits-bzw Abwesenheitsdaten abzufragen, wobei die Rufnummer eines Anschlußorgans einzugeben ist.

18. Verfahren nach Anspruch 17,
dadurch gekennzeichnet,
daß die einen Teilnehmer betreffenden Daten am Vermittlungsplatz (VP) oder einem anderen Endgerät (FE) optisch angezeigt werden, wobei eine Datenübertragung über den zentralen Datenkanal (ZDK) in beiden Richtungen erfolgt.

19. Verfahren nach Anspruch 11,
dadurch gekennzeichnet,
daß die Verbindung zur Personalzeit-Erfassungsanlage (PSA) über ein besonderes Querverbindungs-Anschlußorgan (QA) erfolgt, wobei die Auskunft über einen Teilnehmer per Sprachansage durchgegeben wird.

20. Verfahren nach Anspruch 11,
dadurch gekennzeichnet,
daß beim Aufbauen einer Verbindung zu einem Anschlußorgan (TS) ein besonderer Hörton zu einem anrufenden Teilnehmer gesendet wird, wenn aufgrund der Kennzeichnung im Arbeitsspeicher (AS) feststeht, daß der angerufene Teilnehmer nicht anwesend ist, und daß dem anrufenden Teilnehmer entsprechende Kennzeichnungen übertragen werden, wenn er über ein Endgerät mit optischen Anzeigeeinrichtungen verfügt.

21. Verfahren nach Anspruch 11,
dadurch gekennzeichnet,
daß Informationen über die Anwesenheit oder Abwesenheit von Personen auch auf direktem Weg in den Arbeitsspeicher (AS) gelangen können, wenn Fernsprechendgeräte (FE) zur Personalzeit-Dateneingabe benutzt werden.

## Claims

1. Method for the mutual data exchange between a communications exchange installation and a personnel time detection installation, wherein both the installations are each connected with the other by way of central data channels and/or individual subscriber lines and central control and storage equipments are present in both installations, characterised thereby, that a data transmission to the communications exchange installation (KVA) takes place on actuation of a terminal device (EP) of the personnel time detection installation (PZA) and certain indications can thereby be altered there and/or that information data individual to the subscriber are transmitted from the communications exchange installation (KVA) to the concerned terminal device (EP) of the personnel time detection installation (PZA) and displayed in an indicating equipment (AZE) situated there or issued in speech.

2. Method according to claim 1, characterised thereby, that existing authorisations and/or call diversions or onward transmissions and/or other indications can be switched over or be made ineffective for the subscriber connection (TS), which is identified by an input procedure at a terminal device (EP) of the personnel time detection installation, of the communications exchange installation (KVA).

3. Method according to claim 2, characterised thereby, that subscriber connections (TS) of the communications exchange installation (KVA) can be combined in groups so that indication changes are controlled by way of the time detection only when the entire group of persons is present or absent.

4. Method according to claim 3, characterised thereby, that the group formation can be altered and the group size can be adapted through particular entries (leave, sickness and so forth) at the personnel time detection installation (PZA).

5. Method according to claim 1, characterised thereby, that a special acoustic alerting sign is produced on the occasion of an input procedure that has taken place for an information transmission from the communications exchange installation (KVA) to a terminal device (EP) of the personnel time detection installation (PZA).

6. Method according to claim 1, characterised thereby, that different words and/or pictograms can be displayed in the indicating equipment, which direct a person on "arrival" to present news and/or important matters on the occasion of an input procedure that has taken place for an information transmission from the communications exchange installation (KVA) to a terminal device (EP) of the personnel time detection installation (PZA).

7. Method according to claim 1, characterised thereby, that calls to predetermined subscriber connections (TS) can be initiated by an information transmission from the personnel time detection installation (PZA) to the communications exchange installation (KVA) when persons are still present outside the working time limits or not yet present within the working time limits.

8. Method according to claim 7, characterised thereby, that special subscriber connections (ZTS) stand at disposal for calls of that kind.

9. Method according to claim 7, characterised thereby, that present subscriber connections (TSU) are temporarily claimed for calls of that kind.

10. Method according to claim 7, characterised thereby, that the reporting by the subscriber is monitored for calls of that kind and an announcement is put through and, in the case of no reporting, a special criterion is formed, which is sent to the personnel time detection installation (PZA) and can lead to a print-out and/or an alarm.

11. Method for the mutual data exchange between a communications exchange installation and a personnel time detection installation, wherein both the installations are each connected with the other by way of central data channels and/or individual subscriber lines and central control and storage equipments are present in both installations, characterised thereby, that a mark is transmitted to the communications exchange installation (KVA) and filed in a work storage device (AS) in the region which is associated with the connecting organ (TS) allocated to the person concerned by reason of an "arrival/departure" report at a terminal device (EP) of the personnel time detection installation (PZA) and that an ascertaining and indicating of the presence or absence of a subscriber thereby also takes place besides the ascertaining and indicating of the "free or engaged" state of connecting organs, which is usual in communications exchange installations (KVA).

12. Method according to claim 11, characterised thereby, that the presence or absence of a subscriber is additionally indicated at the switchboard position (VP) when a connection to the connecting organ concerned is being established.

13. Method according to claim 12, characterised thereby, that the reasons for an absence can be displayed individually in the case of an indication of an absence.

14. Method according to claim 11, characterised thereby, that a display field (AF) is provided for the indication of absent or present subscribers and is designed for a predetermined number of connecting organs (TS) and switchable over selectably when the total number of the connecting organs (TS) is greater than the number of the display elements.

15. Method according to claim 14, characterised thereby, that a display field (AF), which is provided for the "engaged" indication, is so switchable over that the absences or presences of the persons belonging to the connecting organs (TS) are indicated.

16. Method according to claim 14, characterised thereby, that the absence of a subscriber is displayed by a flashing indication of the concerned numerals of a telephone number in an "engaged" display field (AF).

17. Method according to claim 11, characterised thereby, that a connection to the personnel time detection installation (PZA) can be established from a switchboard position (VP) or from a terminal device (EP) authorised for this purpose in order to interrogate the data of presence or absence, which concern a person, for which the telephone number of a connecting organ is to be entered.

18. Method according to claim 17, characterised thereby, that the data concerning a subscriber are indicated optically at the switchboard position (VP) or at another terminal device (FE), for which a data transmission takes place in both directions by way of the central data channel (ZDK).

19. Method according to claim 11, characterised thereby, that the connection to the personnel time detection installation (PZA) takes place by way of a special cross-connection connecting organ (QA), for which the information about a subcriber is put through by speech announcement.

20. Method according to claim 11, characterised thereby, that a special audible tone is sent to a calling subscriber during the establishment of a connection to a connecting organ (TS) when it is certain by reason of the marking in the work storage device (AS) that the called subscriber is not present and that corresponding marks are transmitted to the calling subscriber when a terminal device with optical indicating equipments is available to him.

21. Method according to claim 11, characterised thereby, that information data about the presence or absence of persons can also get in direct way into the work storage device (AS) when telephone terminal devices (FE) are utilised for the personnel time data input.

## Revendications

1. Procédé d'échange mutuel de données entre un central de communication et une installation de détection de la présence de personnel, les deux installations étant reliées l'une à l'autre par des canaux centraux de données et/ou des raccordements individuels, et des installations de commande et de mémorisation étant présentes dans les deux installations,
caractérisé en ce que, lors de l'actionnement d'un terminal (EP) de l'installation de détection de la présence de personnel (PZA), a lieu un transfert de données vers le central de communication (KVA), et qu'ainsi des caractéristiques définies en ce dernier emplacement peuvent être modifiées, et/ou que des informations individuelles concernant le participant sont transmises du central de communication (KVA) au terminal (EP) concerné de l'installation de détection de la présence de personnel (PZA), ces informations étant présentées sur un dispositif d'affichage (AZE) se trouvant sur ce terminal ou étant fournies vocalement.

2. Procédé selon la revendication 1, caractérisé en ce que des autorisations existantes et/ou des boucles ou des lignes d'appel et/ou d'autres caractéristiques du raccordement du participant (TS) caractérisé par une procédure d'introduction sur un terminal (EP) de l'installation de détection de la présence de personnel peuvent être commutées ou rendues inactives.

3. Procédé selon la revendication 2, caractérisé en ce que des raccordements de participants (TS) du central de communication (KVA) peuvent être rassemblés par groupes, de sorte que des modifications de caractéristiques ne sont commandées par l'intermédiaire de la détection de présence que lorsque l'ensemble du groupe de personnes est présent ou absent.

4. Procédé selon la revendication 3, caractérisé en ce que la constitution des groupes peut être modifiée et la taille des groupes peut être adaptée sur l'installation de détection de la présence de personnel (PZA) par l'introduction de données particulières (congé, maladie, etc.).

5. Procédé selon la revendication 1, caractérisé en ce que lors, d'un transfert d'informations depuis le central de communication (KVA) vers un terminal (EP) de l'installation de détection de la présence de personnel (PZA), un signal particulier d'avertissement acoustique est créé à l'occasion d'une procédure d'introduction de données exécutée sur cette dernière installation.

6. Procédé selon la revendication 1, caractérisé en ce que, lors d'un transfert d'informations depuis le central de communication (KVA) jusqu'à un terminal (EP) de l'installation de détection de la présence de personnel (PZA), à l'occasion d'une procédure d'introduction de données exécutée sur cette dernière installation, différents mots et/ou pictogrammes sont présentés sur le dispositif d'affichage qui, lors de leur "arrivée", fournissent à une personne des avis actualisés et/ou l'avertissent d'affaires importantes.

7. Procédé selon la revendication 1, caractérisé en ce que des appels vers des raccordements prédéterminés de participants (TS) peuvent être provoqués par un transfert d'informations depuis l'installation de détection de la présence de personnel (PZA) vers le central de communication (KVA) lorsque des personnes sont encore présentes en dehors des limites de temps de travail ou ne sont pas présentes à l'intérieur des limites de temps de travail.

8. Procédé selon la revendication 7, caractérisé en ce que des raccordements spéciaux de participants (ZTS) sont disponibles pour de tels appels.

9. Procédé selon la revendication 7, caractérisé en ce que les raccordements existants de participants (TSU) sont, de manière prédominante, utilisés pour de tels appels.

10. Procédé selon la revendication 7, caractérisé en ce que, pour de tels appels, la réponse du participant est attendue et une annonce est transmise, et qu'en cas de non-réponse est formé un signal spécial qui est envoyé à l'installation de détection de la présence de personnel (PZA) et qui peut entraîner une réaction et/ou une alarme.

11. Procédé d'échange mutuel de données entre un central de communication et une installation de détection de la présence de personnel, les deux installations étant reliées l'une à l'autre par des canaux centraux de données et/ou des raccordements individuels, des installations centrales de commande et de mémorisation existant dans les deux installations,
caractérisé en ce que, lorsqu'un message d'arrivée ou de départ est émis sur un terminal (EP) de l'installation de détection de la présence de personnel (PZA), une caractéristique est transmise au central de communication (KVA), qui est mise en mémoire dans une mémoire de travail (AS) dans la zone qui est associée à l'organe de raccordement (TS) attribué à la personne concernée,
et en ce qu'en plus de la détermination et de l'affichage habituels sur le central de communication (KVA) de l'état libre/occupé des organes de raccordement, il s'effectue également une détermination et un affichage de la présence ou de l'absence d'un participant.

12. Procédé selon la revendication 11, caractérisé en ce que l'absence ou la présence d'un participant est de plus affichée sur le poste central (VP) lors de l'établissement d'une liaison vers l'organe de raccordement concerné.

13. Procédé selon la revendication 12, caractérisé en ce que, lors de l'affichage d'une absence, les raisons d'une absence peuvent être présentées individuellement.

14. Procédé selon la revendication 11, caractérisé en ce qu'il est prévu un champ d'affichage (AF) pour l'affichage de participants absents ou présents, qui est conçu pour un nombre prédéterminé d'organes de raccordement (TS) et peut être commuté, au choix, lorsque le nombre total des organes de raccordement (TS) est supérieur au nombre des éléments d'affichage.

15. Procédé selon la revendication 14, caractérisé en ce qu'un champ d'affichage (AF) prévu pour l'affichage d'occupation des lignes peut être commuté, de telle sorte que les absences ou présences des personnes liées aux organes de raccordement (TS) sont affichées.

16. Procédé selon la revendication 14, caractérisé en ce que sur un champ d'affichage d'occupation des lignes (AF), l'absence d'un participant est représentée par un affichage clignotant des chiffres d'un numéro d'appel concerné.

17. Procédé selon la revendication 11, caractérisé en ce qu'il est possible d'établir, à partir d'un poste central (VP) ou d'un terminal (FE) autorisé à cet effet, une liaison vers l'installation de détection de la présence de personnel (PZA) pour demander des données de présence ou d'absence concernant une personne, le numéro d'appel d'un organe de raccordement devant être introduit.

18. Procédé selon la revendication 17, caractérisé en ce que les données concernant un participant sont affichées optiquement sur le poste central (VP) ou sur un autre terminal (FE), tandis qu'un transfert de données s'effectue dans les deux directions par l'intermédiaire du canal central de données (ZDK).

19. Procédé selon la revendication 11, caractérisé en ce que la liaison vers l'installation de détection de la présence de personnel (PSA) s'effectue par l'intermédiaire d'un organe particulier de raccordement croisé (QA), le renseignement étant transmis vocalement par un participant.

20. Procédé selon la revendication 11, caractérisé en ce que, lors de l'établissement d'une liaison vers un organe de raccordement (TS), une tonalité spéciale est envoyée à un participant appelant lorsqu'à partir de la caractérisation il est établi dans la mémoire de travail (AS) que le participant appelé n'est pas présent, et en ce que des caractérisations correspondantes sont transmises au participant appelant lorsqu'il dispose d'un terminal avec installation d'affichage optique.

21. Procédé selon la revendication 11, caractérisé en ce que des informations concernant la présence ou l'absence de personnes peuvent également être transmises par un parcours direct dans la mémoire de travail (AS) lorsque l'on utilise pour l'introduction de données de présence de personnel des terminaux téléphoniques (FE).
